# EUROPÄISCHE PATENTANMELDUNG

(11) **EP 0 621 062 A2**
(43) Veröffentlichungstag der Anmeldung: **26.10.1994**
(21) Anmeldenummer: 94106228.3
(22) Anmeldetag: 21.04.1994
(51) Int. Cl.: A63H 33/06, A63H 18/02

(54) **Spielfolie**

(30) Priorität: 22.04.1993 DE 4313200; 22.04.1993 DE 4313199
(71) Anmelder: MESSERSCHMITT, Enno, D-85395 Attenkirchen (DE)
(72) Erfinder: MESSERSCHMITT, Enno, D-85395 Attenkirchen (DE)
(74) Vertreter: Pausch, Thomas, Dipl.-Phys.

(57) **Zusammenfassung**

1. Spielschichtanordnung zum lösbaren Befestigen von mindestens einem Spielbaustein (2, 3).

2.1. Bei den bekannten Spielbausteinen besteht nur eine eingeschränkte Verbaubarkeit, insbesondere mit Spielzeugsortimenten unterschiedlicher Hersteller.

2.2. Erfindungsgemäß ist eine Spielschichtanordnung (1) vorgesehen, deren dem Spielbaustein (2, 3) zgewandte Oberflächen (4) zumindest ein erstes mechanisches Verbindungsmittel (5) zum Zusammenwirken mit zumindest einem auf dem oder jedem Spielbaustein vorgesehenen zweiten mechanischen Verbindungsmittel (6) aufweist. Die jedem Spielbaustein (2, 3) abgewandte Oberfläche der Spielfolie (1) weist eine Haftschicht (7) zum lösbaren Anhaften der Spielschichtanordnung (1) an eine Wandung (8) auf. Desweiteren ist die Spielschichtanordnung (1) aus einem Material hergestellt, welches ein Anpassen der Spielschichtanordnung an eine beliebig gekrümmte Oberfläche (9) der Wandung (8) ermöglicht.

2.3. Die erfindungsgemäße Spielschichtanordnung kann zur Verbindung unterschiedlichster Spielbausteine angewendet werden.

## Beschreibung

Die Erfindung bezieht sich auf eine Spielfolie, und insbesondere auf eine Spielfolie zum lösbaren Befestigen von mindestens einem Spielbaustein auf zumindest einem Teil einer Oberfläche der Spielfolie, und auf eine Spielfolie zum lösbaren Befestigen auf mindestens einem Spielbaustein mit mindestens einem Teil einer Oberfläche der Spielfolie, sowie auf eine Spielfolie zur elektrischen Versorgung von zumindest einem elektrischen Spielelement.

Aus der DE-OS 22 39 291 ist ein Bauspielkasten bestehend aus einzelnen Bauelementen bekannt geworden, die vermittels auf dem Klettenprinzip beruhender Flächenreißverschlüsse zusammengebaut werden können. Die Flächenreißverschlüsse sind jeweils auf der Oberfläche der Bauelemente aufgeklebt. Dieser Bauspielkasten zeichnet sich durch eine einfache Handhabung aus und ist daher bereits für Kinder im ersten Spielalter geeignet. Für größere Kinder dürfte die Spielfreude aufgrund der nur begrenzten Bebaubarkeit der Bauelemente insbesondere mit solchen anderer Baukästen eher geringer sein.

Aus der FR-PS 21 44 996 ist ein Konstruktionsspielzeug bestehend aus Klemmbausteinen, die untereinander verbaut werden können, bekannt geworden. Das Spielzeug umfaßt des weiteren eine Basisplatte mit polygonal angeordneten Zylinderauswüchsen, die zur Befestigung der Klemmbausteine vermittels Klemmwirkung dienen.

Aus der US-PS 3101517 ist eine Befestigungsvorrichtung bestehend aus Befestigungselementen aus deformierbarem Kunststoffmaterial bekannt geworden. Jedes Befestigungselement besteht aus einem flächenhaften Körperteil, auf deren einen Oberfläche in einem gewissen Abstand voneinander Auswüchse ausgebildet sind, die für den Eingriff in entsprechend ausgebildete Auswüchse eines weiteren Befestigungselementes ausgebildet sind. Die Auswüchse besitzen eine zur Oberfläche des Körperteils hin sich verjüngende Querschnittsform, so daß eine dauerhafte Verbindung der ineinander eingepaßten Befestigungselemente ermöglicht ist. Eine derartige Befestigungsvorrichtung ist hingegen für den Einsatz bei einem Konstruktionsspielzeug nicht geeignet, da hier neben einer sicheren und formschlüssigen Verbindung der beiden Verbindungselemente eine leichte Lösbarkeit der Spielelemente voneinander auch durch Kinderhände wesentlich ist.

Aus der DE-OS 38 01 827 ist ein Rennspiel bekannt geworden mit einer Oberfläche aus einer durchsichtigen Folie, die von einem Papier unterlegt werden kann, welches grafische Symbole aufweist.

Aus der DE-PS 968 836 ist eine elektrische Stromzuführungseinrichtung für mit Stromabnehmern ausgerüstete Verbraucher, insbesondere für erdbewegliche, elektrische Spielzeuge bekannt geworden. Bei der Stromzuführungseinrichtung ist eine Vielzahl von an mindestens zwei gegeneinander Spannung führende Leiter angeschlossenen Kontakten voneinander isoliert und mosaikartig so angeordnet, daß mindestens zwei Stromabnehmer gegeneinander Spannung führende Kontakte berühren können. Die mosaikartig angeordneten Kontakte sind zu einem biegsamen, flächenhaften, teppich- oder mattenähnlichen Gebilde vereinigt. Diese Stromzuführungseinrichtung stellt eine mehrschichtige gewebeartige Anordnung dar, die dadurch entsprechend aufwendig in der Herstellung ist. Des weiteren stellt sich die Handhabung dieser Einrichtung als Problematisch dar. So ist beispielsweise ein beliebiges Zuschneiden in einzelne Bestandteile nicht ohne weiteres möglich, ohne daß Maßnahmen zur Sicherung der Ränder der Bestandteile zu ergreifen sind.

Weitere Vorrichtungen zur Versorgung von Spielelementen mit elektrischer Spannung sind beispielsweise aus der DE-OS 19 21 755, der DE-OS 16 03 368, der DE-PS 801 902, sowie der GB 21 88 956 A bekannt geworden.

Auf dem Spielwaren-Markt ist desweiteren Konstruktionsspielzeug unterschiedlichster Arten und von verschiedenen Herstellern erhältlich. Ein weltweit bekanntes Konstruktionsspielzeug "LEGO" besteht vornehmlich aus Kunststoff-Klemmbausteinen und -platten, die auf ihrer Oberseite zylindrische geschlossene Klemmnoppen aufweisen; die Unterseite ist so geformt, daß sich die einzelnen Steine und Platten miteinander verbauen lassen. Zu diesem Spielzeugsortiment gehören auch Bausätze z.B. für Figuren, Häuser und Eisenbahnen, die unter Verwendung von Klemmbausteinen und besonderen Elementen zusammengefügt werden können.

Ähnliche Spielzeugsortimente gibt es auch von verschiedenen anderen Herstellern.

Bei sämtlichen auf dem Markt befindlichen Sortimenten der unterschiedlichen Hersteller besteht der Nachteil, daß sie untereinander nicht verbaubar sind. Obzwar bei einigen Sortimenten eine Vielzahl von Elementen unterschiedlichster Formgebungen und Gestaltungen zu erwerben sind, sind stets lediglich Elemente des selben Sortiments des selben Herstellers verbaubar, nicht jedoch mit Elementen eines anderen Sortiments eines anderen Herstellers.

Oftmals besteht bereits bei ein und demselben Sortiment nur eine eingeschränkte Verbaubarkeit der zugehörigen Elemente. Zumeist ergibt sich bereits dadurch, daß in dem Sortiment jedes Element nach demselben Muster hergestellt ist, eine Einschränkung der Verwendbarkeit der Elemente bzw. Spielbausteine, so daß der Phantasie und dem Gestaltungsreichtum des Spielenden enge Grenzen gesetzt werden. Ferner besteht eine nur eingeschränkte Verwendbarkeit von Elementen bzw. Spielbausteinen eines Konstruktionsspielzeuges mit beispielsweise einer elektrischen Autorennbahn oder einer elektrischen Eisenbahn.

Hier will die Erfindung abhelfen. Ziel ist es, eine Erweiterung der Verbaubarkeit und Spielmöglichkeiten von Elementen eines bestehenden Spielzeugsortiments und damit eine Bereicherung für das bestehende Sortiment zur Verfügung zu stellen und/oder sogar eine Verbindung von Elementen unterschiedlicher Spielzeugsortimente von verschiedenen Herstellern zu ermöglichen. Der Erfindung liegt somit die Aufgabe zugrunde, ein in der Verwendbarkeit vielseitiges, in der Handhabung und Herstellung einfaches Spielzeug zur Verfügung zu stellen.

Diese Aufgabe wird durch Anspruch 1, 2, 3, 7 und 10 gelöst.

Erfindungsgemäß ist eine Spielfolie zum lösbaren Befestigen von mindestens einem Spielbaustein auf zumindest einem Teil einer Oberfläche der Spielfolie vorgesehen, wobei die dem oder jedem Spielbaustein zugewandte Oberfläche der Spielfolie zumindest ein erstes mechanisches Verbindungsmittel zum Zusammenwirken mit zumindest einem auf dem oder jedem Spielbaustein vorgesehenen zweiten mechanischen Verbindungsmittel aufweist, und die ersten und zweiten mechanischen Verbindungsmittel für ein gegenseitiges Einführen in einer zur Oberfläche der Spielfolie im wesentlichen rechtwinkeligen Richtung ausgebildet sind.

Bei einer ersten erfindungsgemäßen Ausgestaltung weist die Spielfolie gemäß Anspruch 1 an der dem oder jedem Spielbaustein abgewandten Oberfläche eine Haftschicht zum lösbaren Anhaften der Spielfolie an eine Wandung auf. Hierdurch wird die Verbindung von dem oder jedem Spielbaustein eines bestimmten Spielzeugsortiments, der auf der Spielfolie lösbar befestigt ist, mit der Wandung von beispielsweise einem weiteren Spielbaustein, oder Spielelement aus einem anderen Spielzeugsortiment, oder eines beliebigen Gegenstandes wie beispielsweise ein Möbelstück und dergleichen ermöglicht. Vermittels dieser Spielfolie wird somit die beliebige Verbindung eines oder mehrer Spielbausteine mit einem beliebigen Gegenstand ermöglicht. Als stellvertretendes Beispiel sei beispielsweise die "Landung" eines aus Spielbausteinen gebildeten "Raumschiffes" auf einer "Mondoberfläche" in Form der an einer Schranktür anhaftenden Spielfolie erwähnt.

Die Haftschicht kann hierbei durch die dem Spielbaustein abgewandte Oberfläche der Spielfolie selbst ausgebildet sein, beispielsweise falls die Spielfolie aus einem Material mit einer hohen Adhäsionskraft hergestellt ist (Antirutsch-Oberfläche). Die Haftschicht kann aber auch aus einer auf der Oberfläche der Spielfolie angebrachten Klebeschicht bestehen.

Bei einer weiteren erfindungsgemäßen Ausgestaltung gemäß Anspruch 2 ist die Spielfolie aus einem Material hergestellt, welches ein Biegen der Spielfolie und insbesondere Anpassen der Spielfolie an eine beliebig gekrümmte Oberfläche einer Wandung ermöglicht. Auf diese Weise kann die Verbindung von Spielbausteinen auf einer gekrümmten Oberfläche bewerkstelligt werden.

Bei einer weiteren erfindungsgemäßen Ausgestaltung gemäß Anspruch 3 ist die Spielfolie für Licht im sichtbaren Wellenlängenbereich transparent oder zumindest durchscheinend, und weist an der dem oder jedem Spielbaustein abgewandten Fläche eine aus graphischen Symbolen oder photorealistischen Bildern bestehende oder versehene Schicht auf. Als Beispiele für derartige photorealistische Bilder werden etwa eine Abbildung von Landschaften, Straßenzügen oder dergleichen genannt. Der Vorteil bei dieser Ausgestaltung besteht darin, daß die das Bild enthaltende Schicht auf der dem Spielbaustein abgewandten Oberfläche vorgesehen ist und dadurch vor einem mechanischen Angriff und einem mit der Zeit einsetzenden allmählichen Abrieb geschützt ist. Bei der erfindungsgemäßen Spielfolie bleibt das Bild auch nach einer längeren Ingebrauchnahme der Spielfolie erhalten.

Bei einer weiteren erfindungsgemäßen Ausgestaltung ist die Spielfolie mit zumindest einer stromleitenden Bahn für die elektrische Verbindung von ersten und zweiten mechanischen und/oder elektrischen Verbindungsmitteln ausgestattet, so daß vorteilhafterweise solche Spielbausteine bzw. Spielelemente auf der Spielfolie verbaubar sind, die ein Elektronikbauteil enthalten. Das Elektronikbauteil kann ein beliebiges elektronisches, also auch magnetisches, optoelektronisches, usw. Element darstellen, wie beispielsweise ein Schalter, ein Lämpchen, Widerstand, Kondensator, Transistor, Lichtleiter usw. Vermittels der Spielfolie können die Spielbausteine, welche Elektronikbauteile enthalten, zu durchaus auch komplizierteren elektronischen Schaltungen zusammengesetzt werden, wie beispielsweise Verstärker-, Radio-, und Digitalschaltungen aller Art. In Verbindung mit rein mechanischen Spielbausteinen (ohne Elektronikbauteile) können darüber hinaus auch beispielsweise Häuser mit mehreren Stockwerken erstellt werden, in deren einzelne Zimmer mit Stromleitungen versehene Spielbausteine führen, die beispielsweise Elektronikbauteile mit Lämpchen und Schalter mit elektrischer Spannung versorgen. Somit ermöglicht die erfindungsgemäße Spielfolie die beliebige Verbindung von mechanischen Spielbausteinen und Elektronikbauteilen.

In weiterer Ausgestaltung der Erfindung ist auch eine beliebige Kombination von einigen und/oder sämtlichen der genannten Merkmale denkbar.

Bei einer weiteren vorteilhaften Ausgestaltung der Erfindung ist die Spielfolie aus einem Material und in einer Stärke derart hergestellt, daß ein einfaches Abschneiden von beliebigen Teilen der Spielfolie, vorzugsweise mittels einer Kinderschere ermöglichst ist und/oder die Stützfolie Perforationen aufweist. Auf diese Weise wird es ermöglicht, daß beliebige Teile der Spielfolie verwendet werden können. Als stellvertretendes Anwendungsbeispiel sei die Auskleidung einer Ladefläche eines Spielzeuglastwagens zur lösbaren Befestigung von Spielzeug-Lastgut auf dem Laster genannt.

Gemäß Anspruch 4 stellen die ersten mechanischen und/oder elektrischen Verbindungsmittel noppenförmige Auswüchse dar, die in vorteilhafter Weise in Hohlräume des oder jeden Spielbausteins paßgenau und/oder elastisch verformbar eingreifen. Bei einem elastisch verformbaren Eingreifen besteht der Vorteil, daß die Noppen auch bei einer gekrümmten Oberfläche der Wandung oder bei nicht exakt mit den Hohlräumen des Spielbausteins vorhandenen Abmessungen entsprechend ausgelenkt oder verformt werden können, so daß ein sicherer Halt des Spielbausteins auch auf einer gebogenen Spielfolie gewährleistet ist. In diesem Fall sind die noppenförmigen Auswüchse gemäß Anspruch 5 vorzugsweise aus einem flexiblen Material hergestellt und/oder weisen Hohlräume auf, so daß der oder jeder noppenförmige Auswuchs elastisch beaufschlagt in die Vertiefung des Spielbausteins drückbar ist, um den Spielbaustein lösbar auf der Oberfläche der Spielfolie zu arretieren. Von Vorteil weist jeder noppenförmige Auswuchs gemäß Anspruch 6 einen in Richtung zur Oberfläche der Spielfolie sich verjüngenden Querschnitt auf, so daß der Auswuchs die äußere Gestalt eines "Pilzes" besitzt.

Bei einer weiteren Ausgestaltung der Erfindung weist zumindest einer der noppenförmigen Auswüchse eine elektrisch betreibbare Leuchte, insbesondere eine lichtemittierende Diode (LED) auf. Eine solche Leuchtdiode kann beispielsweise zur Beleuchtung eines auf diesem noppenförmigen Auswuchs befestigten Spielbausteins dienen. Bei einem weiteren Beispiel ist denkbar, daß mehrere solcher Leuchtdioden, gegebenenfalls in unterschiedlichen Farben, angeordnet sind, die zur Aktivierung eines bestimmten Leuchtmusters, eines Lauflichtes, Anzeigenformate und dergleichen aktiviert werden. Die Anwendungsmöglichkeiten sind auch hier an sich beliebig denkbar.

Bei einer weiteren Ausgestaltung der Erfindung ist der Hohlraum des oder jeden noppenförmigen Auswuchses mit einem Material gefüllt. Das Material kann eine bestimmte Farbe aufweisen, um dem oder mehreren Noppen ein bestimmtes Aussehen zu verleihen, etwa die Farbe grün zur Darstellung einer Wiese, die Farbe grau zur Darstellung einer Straße und dergleichen. Andererseits kann das Material auch so ausgewählt sein, daß der mit dem Material gefüllte noppenförmige Auswuchs eine erhöhte Festigkeit und Steifigkeit erfährt.

Bei einer weiteren erfindungsgemäßen Ausgestaltung gemäß Anspruch 7 weist die dem oder jedem Spielbaustein abgewandte Oberfläche der Spielfolie zumindest eine wenigstens frei von Erhebungen vorgesehene Spielfläche auf. Die der Spielfolie zugewandte Oberfläche des oder jeden Spielbausteins besitzt ein erstes mechanisches Verbindungsmittel, welches mit einem am Randbereich der Spielfläche der Spielfolie vorgesehenen zweiten Verbindungsmittel zusammenwirkt. Hierbei sind die ersten und zweiten mechanischen Verbindungsmittel für ein gegenseitiges Einführen in einer zur Oberfläche der Spielfolie im wesentlichen rechtwinkligen Richtung ausgebildet. Die auf der Spielfolie vorgesehene Spielfläche ist annähernd ebenmäßig oder glatt, oder doch wenigstens frei von Erhebungen. Die Abmessungen bzw. der Flächeninhalt der Spielfläche macht zumindestens ein Vielfaches der Abmessungen bzw. des Flächeninhalts eines ersten mechanischen Verbindungsmittel aus.

Die Spielfläche kann beispielsweise die Form und Gestaltung einer Straße für ein Spielzeugauto haben, oder als Modell einer Landschaftsform wie beispielsweise ein Berg und dergleichen geformt sein.

Bei einer Ausgestaltung der Erfindung besteht das erste mechanische Verbindungsmittel gemäß Anspruch 8 aus Klemmnocken bestehen, die in entsprechend geformte Hohlräume des genannten Teils der Oberfläche der Spielfolie paßgenau eingreifen. Auf diese Weise wird ein fester, jedoch lösbarer Sitz der Spielfolie auf dem oder jedem Spielbaustein gewährleistet.

Bei einer besonders bevorzugten Ausführungsform stellen die zweiten Verbindungsmittel der Spielfolie gemäß Anspruch 9 Bohrungen dar. In diesem Fall besitzt die Spielfolie bzw. ein entsprechender Teil der Spielfolie die äußere Gestalt einer Lochplatte. Eine solche Spielfolie ist desweiteren zur "Neutralisierung" der Noppen-Oberfläche der Spielbausteine geeignet, um diese Oberfläche zu glätten und auf diese Weise zum Befahren mit einem Spielzeugfahrzeug, oder andere Zwecke geeigneter zu machen.

Eine weitere Spielfolie gemäß der Erfindung ist in vorteilhafter Weise für Licht in sichtbaren Wellenlängenbereich transparent oder zumindest durchscheinend, und weist an der dem oder jedem Spielbaustein zugewandten Oberfläche eine mit graphischen Symbolen oder photorealistischen Bildern bestehende oder versehene Schicht auf. In diesem Fall besitzt die Spielfolie ein bestimmtes, unveränderbares Bild. Alternativ hierzu kann das Bild vorteilhafterweise dadurch geändert werden, wenn benachbart zu der dem oder jedem Spielbaustein zugewandten Oberfläche der Spielfläche ein mit graphischen Symbolen oder photorealistischen Bildern bestehendes oder versehenes Blatt, beispielsweise aus Papier einlegbar ist.

In vorteilhafter Weise ist zumindest ein Teil der Spielfolie oder die gesamte Spielfolie geprägt oder tiefgezogen hergestellt.

In vorteilhafter Weise weist zumindest ein Teil der Spielfolie oder die gesamte Spielfolie ein Material bestehend aus Polyvinylchlorid (PVC), Polyester, Gummi oder ein elastomeres Material auf.

Bei einer bevorzugten Ausführungsform ist die Spielfolie als Meterware hergestellt, welche in Ballen aufgerollt ist.

Bei einem weiteren Aspekt der Erfindung ist gemäß Anspruch 10 eine Spielfolie zur elektrischen Versorgung von zumindest einem elektrischen Spielelement vorgesehen, wobei die dem oder jedem Spielelement zugewandte Oberfläche der Spielfolie eine Vielzahl von jeweils mit einem ersten Potential zu verbindenden ersten elektrischen Kontaktstellen und eine Vielzahl von jeweils mit einem vom ersten Potential unterschiedlichen zweiten Potential zu verbindenden zweiten Kontaktstellen aufweist. Die ersten und die zweiten Kontaktstellen sind mit solchen Abständen voneinander und abwechselnd derart angeordnet, daß pro beliebiger Flächeneinheit in etwa dieselbe Anzahl von ersten und von zweiten Kontaktstellen vorhanden ist. Das oder jedes Spielelement weist zumindest einen ersten Kontaktabgriff auf, welcher mit wenigstens einer ersten Kontaktstelle elektrisch zu verbinden ist, und weist zumindest einen zweiten Kontaktgriff auf, welcher mit wenigstens einer zweiten Kontaktstelle elektrisch zu verbinden ist. Auf diese Weise kann das oder jedes Spielelement auf einer beliebigen Stelle der Spielfolie mit dem ersten und dem zweiten Potential und damit mit elektrischer Spannung versorgt werden.

Bei einer vorteilhaften Ausgestaltung der Erfindung weisen die Kontaktstellen elektrisch leitende Zylinderbereiche auf, die derart in der Spielfolie angeordnet sind, daß eine Grundfläche der Zylinderbereiche aus der dem Spielelement zugewandten Oberfläche der Spielfolie geringfügig herausragt oder mit dieser Oberfläche annähernd eine gerade Ebene bildet. Auf diese Weise erscheint die dem oder jedem Spielelement zugewandte Oberfläche der Spielfolie als gleichmäßige, annähernd ebene Fläche, die für eine Vielzahl von Anwendungen brauchbar ist.

Bei einer insbesondere bevorzugten Ausgestaltung der Erfindung stellt das Spielelement ein auf zumindest einem Teil der Oberfläche der Spielfolie zu bewegendes Spielfahrzeug dar, welches mit elektrischer Spannung zu versorgen ist. Hierzu weist das Spielfahrzeug eine Vielzahl von Kontaktabgriffen auf, die in eine erste Gruppe und eine zweite Gruppe derart geschaltet ist, daß die erste Gruppe einen elektrischen Stromfluß nur von dem ersten Potential, und die zweite Gruppe einen elektrischen Stromfluß nur von dem zweiten Potential zuläßt. Die Kontaktabgriffe sind in Anzahl, Abmessungen und Abständen derart angeordnet, daß bei einer beliebigen Position, Fahrtrichtung und Fahrgeschwindigkeit des Spielfahrzeuges auf der Spielfolie zumindest einer der Kontaktabgriffe aus der ersten Gruppe mit einer ersten Kontaktstelle und wenigstens ein weiterer Kontaktabgriff aus der zweiten Gruppe mit einer zweiten Kontaktstelle zumindest zeitweise in elektrischer Verbindung steht. Auf diese Weise kann das Spielfahrzeug an eine beliebige Stelle auf der Spielfolie bewegt werden, und zwar unabhängig von möglicherweise weiteren auf der Spielfolie vorhandenen Spielfahrzeuge, die ebenfalls beliebig auf der Spielfolie zu bewegen sind.

Bei der Ausgestaltung stellen die Kontaktabgriffe des Spielfahrzeuges elektrisch leitende Kontaktbürsten dar, deren Durchmesser kleiner ist als ein kleinster Abstand zweier beliebiger benachbarter Kontaktstellen auf der Oberfläche der Spielfolie. Hierdurch wird gewährleistet, daß auch bei einer beliebigen Position und Lage des Spielfahrzeuges auf der Spielfolie kein Kurzschluß zwischen zwei benachbarten Kontaktstellen mit unterschiedlichen Potentialen auftritt.

Vorteilhafterweise stellt das erste Potential ein Plus-Potential und das zweite Potential ein Minus- bzw. Masse-Potential einer Gleichspannungsquelle zur Lieferung eines digitalen Signales dar. Den Kontaktabgriffen in dem oder jedem Spielfahrzeug ist eine Digitalsteuereinheit nachgeschaltet, die als Reaktion auf das digitale Signal von der Spielfolie Steuerimpulse auf das Spielfahrzeug zur Steuerung der Fahrtrichtung und der Fahrgeschwindigkeit und/oder gegebenenfalls zur Steuerung weiterer elektrischer Verbraucher wie Beleuchtungs-, Ausleger-, Hebe- und Alarmeinrichtungen des Spielfahrzeuges ausgibt. Auf diese Weise ist über ein- und dieselbe Gleichspannungsleitung ein Spielfahrzeug nicht nur hinsichtlich Fahrtrichtung und Fahrgeschwindigkeit auf der Spielfolie steuerbar, sondern unabhängig und/oder gleichzeitig hiervon auch beliebige andere elektrisch betätigbare Funktionen des Spielfahrzeugs steuerbar. Außerdem ist nicht nur ein einziges Spielfahrzeug, sondern an sich eine beliebige Anzahl von Spielfahrzeugen getrennt und unabhängig voneinander ansteuerbar. Das Spielfahrzeug kann ein Auto oder Motorrad mit relativ wenigen ansteuerbaren Funktionen sein, kann jedoch auch ein Fahrzeug mit einer Vielzahl von Sonderfunktionen sein, etwa ein Spielzeugkran mit einem Ausleger, ein Spielzeugbagger, ein Spielzeugbetonmischer und dergleichen mehr. Insbesondere letztere Typen von Spielfahrzeugen können hinsichtlich Beschaffenheit und Größe derart ausgebildet sein, daß sie auch im Freien verwendbar sind, beispielsweise in einem Sandkasten.

Neben einem digitalen Schaltprinzip sind hierbei grundsätzlich auch analog arbeitende Schaltprinzipien denkbar, beispielsweise pulsmodulierte (PCM) arbeitende Schaltprinzipien, die eine beliebige Ansteuerung von mehreren Spielfahrzeugen unabhängig voneinander erlauben.

Mit den Kontaktstellen der Spielfolie ist vorzugsweise direkt über ein Kabel oder über ein Infrarotlicht arbeitendes drahtlos verbundenes Steuerpult elektrisch gekoppelt, in welches entsprechend den Informationen zur Aktivierung und Ansteuerung der jeweiligen Spielfahrzeuge Daten einzugeben sind, wie beispielsweise Nummer des zu steuernden Spielfahrzeugs, Richtung und Geschwindigkeit, Sonderfunktionen und dergleichen.

Bei einer weiteren erfindungsgemäßen Ausgestaltung ist auf zumindest einem Teil der Oberfläche der Spielfolie zur elektrischen Versorgung von zumindest einem elektrischen Spielelement zumindest ein erstes mechanisches Verbindungsmittel zum Zusammenwirken mit zumindest einem auf dem Spielelement vorgesehen zweiten Verbindungsmittel vorgesehen, wobei die ersten und zweiten mechanischen Verbindungsmittel für ein gegenseitiges Einführen in einer zur Oberfläche der Spielfolie im wesentlichen rechtwinkeligen Richtung ausgebildet sind. Auf diese Weise wird ermöglicht, daß auf diesem Teil der Oberfläche der Spielfolie ein Spielelement lösbar befestigt werden kann. Bezüglich der Einzelheiten, Merkmale und Vorteile dieser ersten und zweiten Verbindungsmittel, und der auf dem Spielelement vorgesehenen zweiten Verbindungsmittel, sowie der Ausgestaltungen der Spielelemente bzw. Spielbausteine wird auf die Merkmale der ersten Ausführungsformen der Erfindung verwiesen.

Weitere Einzelheiten, Aspekte und Vorteile der vorliegenden Erfindung ergeben sich aus der nachfolgenden Beschreibung unter Bezugnahme auf die Zeichnung.

Es zeigt:
- Fig. 1: eine schematische Draufsicht einer Spielfolie gemäß einem Ausführungsbeispiel der Erfindung;
- Fig. 2: eine schematische Schnittansicht des in Fig. 1 dargestellten Ausführungsbeispieles;
- Fig. 3: eine schematische Schnittansicht einer Spielfolie gemäß einem weiteren Ausführungsbeispiel der Erfindung;
- Fig. 4: eine schematische Schnittansicht einer Spielfolie gemäß einem weiteren Ausführungsbeispiel der Erfindung;
- Fig. 5: eine schematische Ansicht einer Spielfolie mit einer Spielfläche entsprechend einem weiteren Ausführungsbeispiel der Erfindung;
- Fig. 6a, b: schematische Ansichten einer Spielfolie mit einer Spielfläche entsprechend einem weiteren Ausführungsbeispiel der Erfindung;
- Fig. 7: eine schematische Ansicht einer Spielfolie mit einer Spielfläche entsprechend einem weiteren Ausführungsbeispiel der Erfindung;
- Fig. 8: eine schematische Ansicht einer Spielfolie mit einer Spielfläche entsprechend einem weiteren Ausführungsbeispiel der Erfindung;
- Fig. 9a, b: schematische Draufsichten einer Spielfolie mit Elektronik-Bausteinen gemäß einem weiteren Ausführungsbeispiel der Erfindung;
- Fig. 10: eine schematische Schnittansicht einer Spielfolie mit zwei Elektronik-Bausteinen gemäß einem weiteren Ausführungsbeispiel der Erfindung;
- Fig. 11: eine schematische Schnittansicht einer Spielfolie mit zwei Elektronik-Bausteinen gemäß einem weiteren Ausführungsbeispiel der Erfindung; und
- Fig. 12: eine schematische Schnittansicht einer Spielfolie gemäß einem weiteren Ausführungsbeispiel der Erfindung;
- Fig. 13: eine schematische Draufsicht eines Ausschnittes der Spielfolie gemäß der Erfindung;
- Fig. 14: eine schematische Seitenschnittansicht einer erfindungsgemäßen Spielfolie mit einem darauf befindlichen Spielfahrzeug;
- Fig. 15: eine schematische Seitenschnittansicht einer erfindungsgemäßen Spielfolie mit einem darauf befindlichen Spielfahrzeug; und
- Fig. 16: eine schematische Seitenschnittansicht eines Auschnittes einer Spielfolie gemäß der Erfindung mit einem Spielfahrzeug und weiteren Spielelementen.

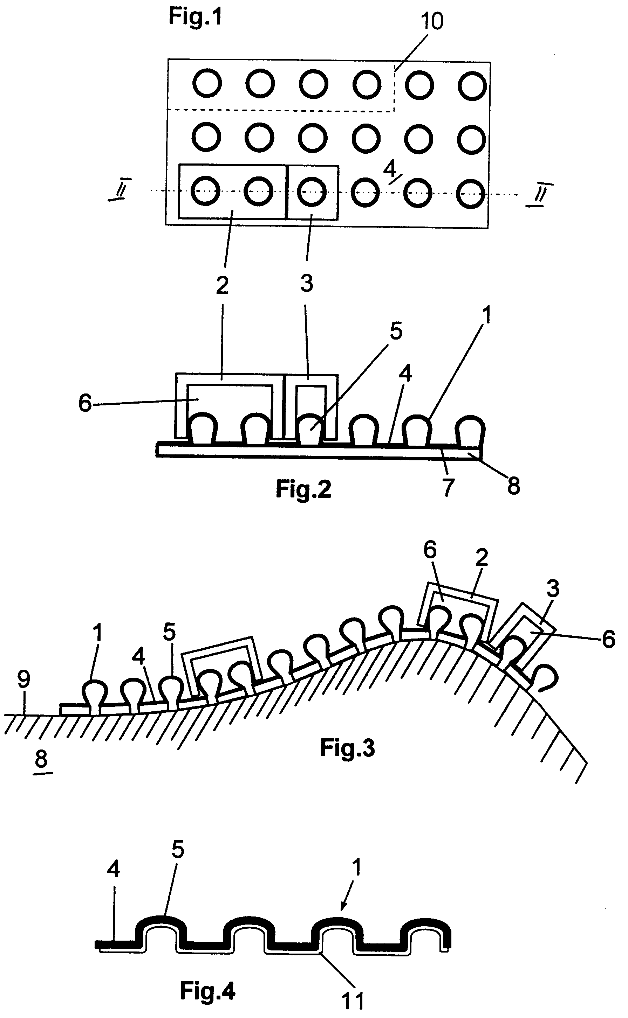

In den Figuren 1 und 2 ist eine Spielfolie 1 in Drauf- und Seitenschnittansicht dargestellt mit zwei Spielbausteinen 2 und 3, die auf der Oberfläche 4 der Spielfolie 1 lösbar befestigt sind. Auf der Oberfläche 4 der Spielfolie 1 ist hierzu eine Vielzahl von noppenförmigen Auswüchsen 5 gebildet, welche in einen Hohlraum 6 der Spielbausteine 2 und 3 eingreifen und diesen auf der Oberfläche 4 Spielfolie 1 festhalten. Der noppenförmige Auswuchs 5 kann starr ausgebildet sein, wobei in diesem Falle die äußeren Abmessungen und gegenseitigen Abstände der Auswüchse 5 derart ausgewählt sind, daß eine paßgenaue, jedoch lösbare Befestigung eines oder mehrerer Spielbausteine durch Klemmwirkung erzielt werden kann. Man erkennt, daß Spielbausteine mit einem Vielfachen der Abmessungen des Einheits-Spielbausteins 3 ohne weiteres auf einer derart gestalteten Spielfolie 1 befestigbar sind.

Die Spielfolie 1 weist gemäß Fig. 2 an deren Unterseite eine Haftschicht 7 auf, welches ein lösbares Anhaften der Spielfolie 1 an eine schematisch dargestellte Wandung 8 ermöglicht. Die Haftwirkung kann durch das Material der Spielfolie 1 selbst begründet sein; in diesem Fall ist die Spielfolie beispielsweise aus einem gummiartigen Material hergestellt, welches inhärent eine haftende Oberfläche besitzt. Andererseits kann die Haftschicht 7 auch durch eine spezielle Beschichtung der Unterseite der Spielfolie 1 ausgebildet sein, etwa in Form eines aufgebrachten Materials mit den gewünschten Hafteigenschaften. Desweiteren kann die Haftschicht 7 auch eine auf die Unterseite der Spielfolie 1 aufgetragene Klebeschicht sein. In diesem Fall kann die Spielfolie 1 auch an vertikalen oder sogar überhängenden Wandungen 8 zumindest zeitweise sicher befestigt werden.

Die Spielfolie 1 kann (einschließlich der Haftschicht) einstückig aus einem bestimmten Material hergestellt sein; andererseits ist auch denkbar, daß eine die Oberfläche 4 aufweisende Grundschicht durchgehend aus einem ersten Material gebildet ist, während die noppenförmigen Auswüchse 5 aus einem anderen Material gebildet sind und mit der Grundschicht 4 fest verbunden sind. Im letzteren Fall kann das Material der Grundschicht 4 biegeelastisch sein, während die noppenförmigen Auswüchse 5 aus einem starren Material hergestellt sein können.

Bei dem in Fig. 3 dargestellten Ausführungsbeispiel der erfindungsgemäßen Spielfolie 1 ist diese aus einem Material hergestellt, welches ein Biegen der Spielfolie und insbesondere Anpassen der Spielfolie 1 an eine beliebig gekrümmte Oberfläche 9 einer Wandung 8 ermöglicht. Als denkbares Material für die Spielfolie 1 kommt beispielsweise ein Kunststoffmaterial, jedoch darüberhinaus auch ein Textilmaterial oder dergleichen in Frage. Die noppenförmigen Auswüchse 5 der Spielfolie 1 sind bei dem Ausführungsbeispiel gemäß Fig. 3 ebenfalls aus einem (gegebenenfalls demselben) elastischen Material hergestellt, so daß geometrische Unregelmäßigkeiten in den Abständen der Auswüchse aufgrund der gekrümmten Oberfläche 9 dadurch ausgeglichen werden können, daß der noppenförmige Auswuchs elastisch verformbar in den Hohlraum der Spielbausteine 2 und 3 eingreifen. Man erkennt, daß auch bei stärkeren Krümmungen der Oberfläche 9 eine sichere Befestigung von Spielbausteinen 2, 3 auf der Spielfolie 1 gewährleistet ist.

In der Oberfläche 4 der Spielfolie 1 ist desweiteren eine Perforation 10 vorgesehen, die ein einfaches Auftrennen der Spielfolie an diesen Stellen ohne weitere Hilfsmittel ermöglicht. Auf diese Weise kann die Spielfolie 1 in beliebige Abschnitte unterteilt werden. Alternativ hierzu ist zumindest die Oberfläche 4 aus einem solchen Material und in einer derartigen Stärke hergestellt, daß ein einfaches Abschneiden von beliebigen Teilen der Spielfolie 1, vorzugsweise vermittels einer Kinderschere ermöglicht ist. Ein solches Material stellt beispielsweise Polyvinylchlorid (PVC), Polyester, Gummi oder ein ähnliches Material dar.

Bei dem in Fig. 4 dargestellten Ausführungsbeispiel gemäß der Erfindung ist die Spielfolie 1 aus einem Material hergestellt, welches für Licht im sichtbaren Wellenlängenbereich transparent oder zumindest durchscheinend ist. Die Spielfolie 1 kann in diesem Fall an der dem oder jedem Spielbaustein abgewandten Oberfläche eine aus graphischen Symbolen oder photorealistischen Bildern bestehende oder versehene Schicht 11 aufweisen. Die transparente Spielfolie 1 dient hier zugleich als Schutz für die darunter befindliche photorealistische Schicht.

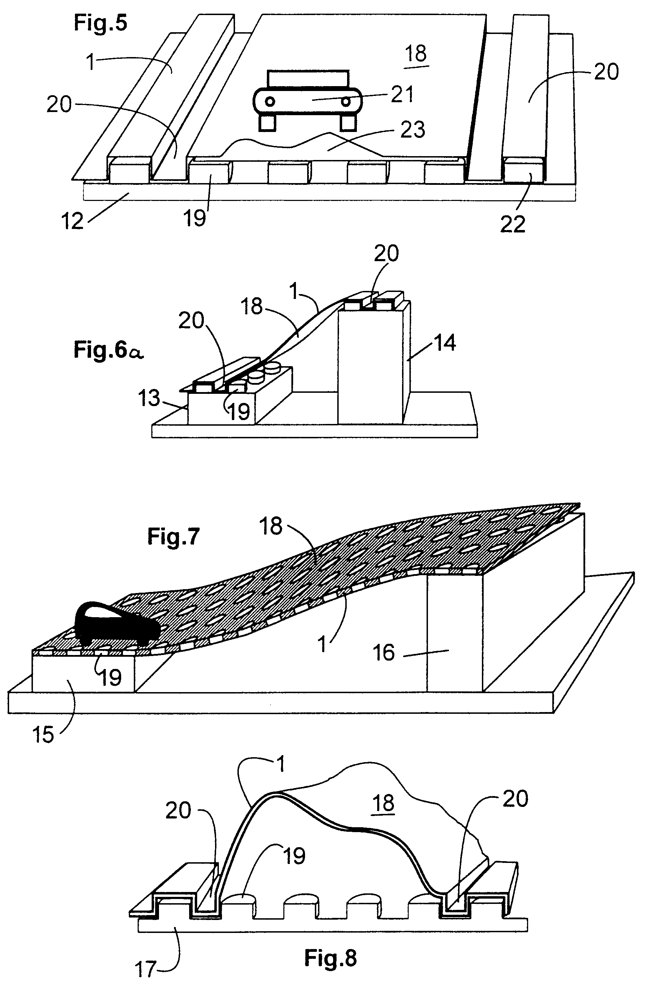

Die Figuren 5 bis 8 zeigen weitere Ausführungsbeispiele einer erfindungsgemäßen Spielfolie, welche auf Spielbausteinen 12 bis 17 lösbar zu befestigen sind. Allen diesen Ausführungsbeispielen ist gemeinsam, daß die Spielfolie 1 an der jedem Spielbaustein 12 bis 17 abgewandten Oberfläche eine Spielfläche 18 besitzt, die zwar nicht unbedingt vollständig glatt, aber im wesentlichen frei von Erhebungen ausgebildet ist. Der Flächeninhalt der Spielfläche 18 ist erheblich größer als ein Flächeninhalt der Grundfläche eines zylinderförmigen Klemmnoppens 19 der in bekannter Weise auf dem Spielbaustein 12 - 17 in regulärer Vielzahl angeordnet ist. Einige dieser Klemmnoppen 19 wirken mit jeweils seitlich an der Spielfläche 18 angeordneter mechanischer Verbindungsmittel 20 derart zusammen, daß die Spielfolie 1 lösbar auf dem Spielbaustein 12 bis 17 zu befestigen ist.

Bei dem in Fig. 5 dargestellten Ausführungsbeispiel ist die Spielfläche 18 als Spielzeugstraße für ein Spielfahrzeug 21 ausgebildet. Seitlich neben der Spielfläche 18 besitzt die Spielfolie 1 ein Verbindungsteil 20 mit einem Profil, dessen Abmessungen wie dargestellt mit den Abständen und Abmessungen der Klemmnoppen 19 zusammenpaßt. Auf diese Weise kann die vorzugsweise aus einem starren Material hergestellte Spielfolie 1 mit dem Verbindungsteil 20 auf dem Spielbaustein 12 befestigt werden.

Zwischen der Spielfläche 18 und der unmittelbar unterhalb der Spielfläche befindlichen Klemmnoppen 19 ist eine gewisse Lücke 22 vorgesehen, in welche ein bedrucktes Blatt Papier 23 einlegbar ist. Die Spielfläche 18 ist hierbei aus einem Material hergestellt, welches für Licht im sichtbaren Wellenlängenbereich transparent oder zumindest durchscheinend ist. Auf diese Weise kann die auf dem Papierblatt 23 aufgetragene Zeichnung oder Photografie durch die Spielfläche 18, welche das Bild auf dem Blatt Papier zugleich schützt, beobachtet werden. Bei dieser Lösung besteht der weitere Vorteil, daß der Spielende Motiv und Gestaltung des Bildes auf dem Blatt Papier 23 selbst auswählen kann.

Bei der Ausführungsform gemäß Fig. 6a oder Fig. 6b besteht die Spielfläche 18 aus einem Teil einer Autorennbahn, die unter Zuhilfenahme mehrerer solcher Spielfolien 1 mit ähnlich aussehenden Spielflächen zu einer Spielzeugbahn, etwa in der Form einer Achterbahn zusammensetzbar ist.

Bei dem in Fig. 7 dargestellten Ausführungsbeispiel einer erfindungsgemäßen Spielfolie 1 mit einer Spielfläche 18 sind Bohrungen 24 mit solchen Durchmessern und Abständen voneinander vorgesehen, daß die Klemmnoppen 19 in die Bohrungen paßgenau eingreifen. Auf diese Weise kann die Spielfolie 1 auf den Spielbausteinen 15 und 16 befestigt werden. Bei dem Ausführungsbeispiel gemäß Fig. 7 kann die Spielfolie 1 bzw. zumindest die Spielfläche 18 auch aus einem elastischen Material hergestellt sein.

Bei dem in Fig. 8 dargestellten Ausführungsbeispiel besitzt die Spielfläche 18 die Form eines Berges oder einer sonstigen Landschaftsform.

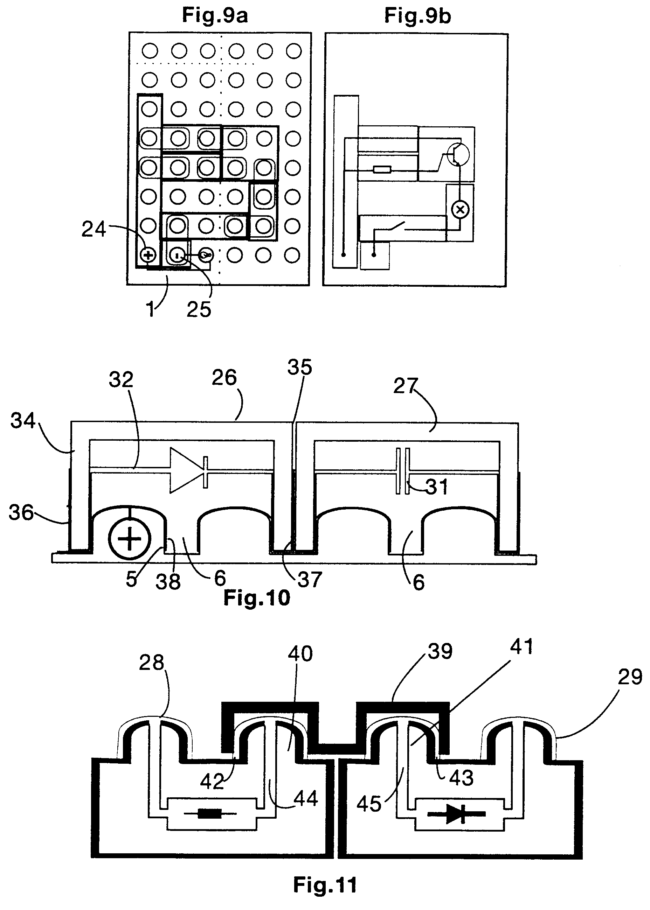

In Fig. 9a ist ein weiteres Ausführungsbeispiel einer erfindungsgemäßen Spielfolie 1 in Draufsicht dargestellt, welche zur lösbaren Befestigung von Elektronikbauteilen auf der Oberfläche der Spielfolien geeignet ist. In Fig. 9b ist ein schematisches Schaltungsdiagramm der gemäß Fig. 9a aufgebauten Schaltung dargestellt.

Man erkennt anhand der Fig. 9a, daß zwei noppenförmige Auswüchse 24 und 25 als "Plus" bzw. "Minus"-Pol einer Gleichspannungsquelle ausgebildet sind. Hierzu sind die Auswüchse 24 und 25 jeweils mit einer elektrisch leitenden Beschichtung versehen, die mit den Polen einer (nicht näher dargestellten) Spannungsquelle verbunden ist. Für den Aufbau der in Fig. 9b gezeigten Elektronik-Schaltung sind beispielsweise die in Fig. 10 oder Fig. 11 dargestellten Spielbausteine 26 bis 29 vorgesehen, die im Inneren ein Elektronikbauteil enthalten, beispielsweise eine Diode 30, oder einen Kondensator 31. Die Anschlüsse 32 und 33 eines Elektronikbauteils 30 befinden sich jeweils in elektrischen Kontakt mit einer an den Stirnseiten 34 und 35 des Bausteins 26 angebrachten elektrisch leitenden Oberfläche 36 und 37. Auf diese Weise ist eine Vielzahl von Spielbausteinen, welche Elektronikbauteile enthalten, verbindbar. In Fig. 10 erkennt man desweiteren, daß der elektrische Anschluß 32 des Elektronikbauteils 30 mit einem noppenförmigen Auswuchs 5, der einen Plus-Pol einer Gleichspannungsquelle darstellt, verbunden ist. Mit der Bezugsziffer 38 ist hierbei schematisch ein elektrisch leitender Überzug, etwa aus einer metallischen Beschichtung, angedeutet.

Fig. 11 zeigt eine weitere, alternative Verbindungsmöglichkeit der Elektronikbauteile untereinander. Es ist ein Klemmbügel 39 vorgesehen, der aus einem elektrisch leitenden Material hergestellt ist und zwei Klemmnoppen 40, 41, die mit einem elektrisch leitenden Überzug 42 und 43 versehen sind und mit Anschlüssen 44 und 45 der Elektronikbauteile verbunden sind, elektrisch miteinander verbindet.

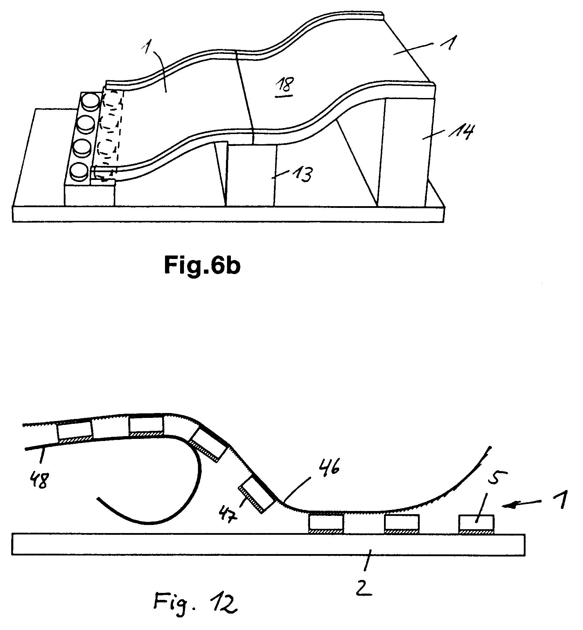

Fig. 12 zeigt eine schematische Schnittansicht einer Spielfolie gemäß einem weiteren Ausführungsbeispiel der Erfindung, bei der die ersten mechanischen Verbindungsmittel 5 (Noppen) lösbar auf der einem Spielbaustein (2) zugewandten Oberfläche einer Klebefolie 46 in bestimmten Abständen voneinander angebracht sind. Die ersten mechanischen Verbindungsmittel 5 weisen ihrerseits an der Unterseite eine Klebe- bzw. Haftschicht 47 auf, die vor dem Anbringen der Verbindungsmittel 5 auf dem Spielbaustein 2 durch eine Schutzfolie 48, welche abziehbar ist, bedeckt sind. Durch diese Anordnung der erfindungsgemäßen Spielfolie 1 können die Noppen 5 auf einfache Weise mit den richtigen Abständen zueinander auf dem Spielbaustein 2 lösbar befestigt werden, wobei die Trägerfolie 46 von den einzelnen Noppen 5 entfernt werden kann.

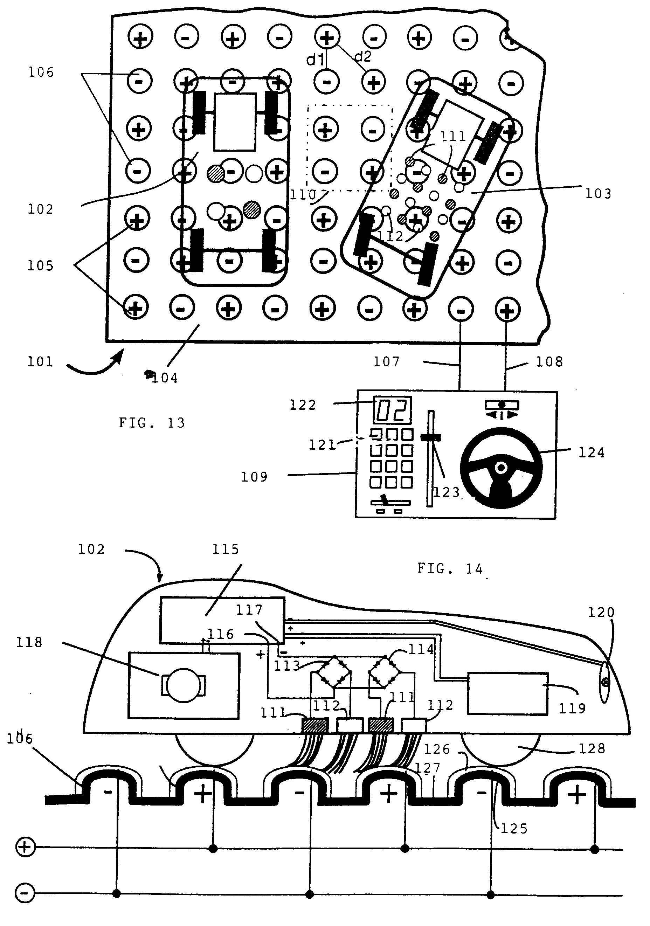

Fig. 13 zeigt ein erstes Ausführungsbeispiel einer erfindungsgemäßen Spielfolie 101 zur elektrischen Versorgung von im dargestellten Fall zweier Spielelemente 102 und 103, die auf der Oberfläche 104 der Spielfolie 101 zu bewegende Spielfahrzeuge darstellen. Die Oberfläche 104 der Spielfolie 101 weist eine Vielzahl von schematisch mit einem "+"-Zeichen angedeutete erste elektrische Kontaktstellen 105, und eine Vielzahl von schematisch mit einem "-"-Zeichen angedeuteten zweiten Kontaktstellen 106 auf. Die ersten elektrischen Kontaktstellen 105 sind aus elektrisch leitendem Material hergestellt und untereinander elektrisch verbunden. Entsprechend sind die zweiten Kontaktstellen aus einem elektrisch leitendem Material hergestellt und untereinander elektrisch verbunden. Die ersten elektrischen Kontaktstellen sind von den zweiten elektrischen Kontaktstellen elektrisch voneinander isoliert. Die ersten und zweiten Kontaktstellen sind vermittels einer Stromleitung 107 bzw. 108 an ein Steuerpult 109 angeschlossen, welches die Kontaktstellen mit der benötigten Steuerspannung versorgt.

Die ersten Kontaktstellen 105 und die zweiten Kontaktstellen 106 sind über die gesamte Oberfläche 104 der Spielfolie 101 verteilt mit solchen Abständen d1 bzw. d2 und abwechselnd voneinander derart angeordnet, daß pro beliebiger Flächeneinheit in etwa dieselbe Anzahl von ersten und von zweiten Kontaktstellen 105 und 106 vorhanden ist. Eine solchermaßen beliebige Flächeneinheit ist in Fig. 13 schematisch mit der Bezugsziffer 110 angedeutet, welche je zwei Kontaktstellen umschließt. Auf diese Weise ist gewährleistet, daß auf einer beliebigen Stelle der Oberfläche 104 der Spielfolie 101 zumindest eine erste und eine zweite Kontaktstelle zur Versorgung des Spielelementes mit elektrischer Spannung zu finden ist. Bei dem in Fig. 13 dargestellten Ausführungsbeispiel sind die Kontaktstellen 105 und 106 in Form eines matrixförmigen Rasters angeordnet; es ist an sich nicht erforderlich, daß die Kontaktstellen streng symmetrisch und regelmäßig angeordnet sind, so lange die vorstehend genannte Bedingung erfüllt ist.

Jedes Spielelement 102, 103 besitzt Kontaktabgriffe 111, 112, die mit den ersten und zweiten Kontaktstellen 105 und 106 auf der Spielfolie 101 elektrisch zu verbinden sind. Hierbei sind die Kontaktabgriffe 111, 112 in Anzahl, Abmessung und Dichte derart vorgesehen, daß bei einer beliebigen Position, Fahrtrichtung und Fahrgeschwindigkeit des Spielelementes 102, 103 auf der Spielfolie 101 die stetige Versorgung jedes Spielelementes mit elektrischer Spannung gewährleistet ist, ohne daß ein Kurzschluß zu befürchten ist. Bei dem Spielfahrzeug 102 sind beispielhaft vier Kontaktabgriffe vorgesehen, während das Spielfahrzeug 103 sechzehn derartiger Kontaktabgriffe besitzt. Man erkennt ohne weiteres aus Fig. 13, daß ein bestimmter Kontaktabgriff 111, 112 zur selben Zeit mit höchstens einer Kontaktstelle Kontakt hat, so daß Kurzschlußgefahr ausgeschlossen ist. Außerdem ist zu erkennen, daß zumindest einer von ersten, schraffiert dargestellten Kontaktabgriffen 111 mit mindestens einer ersten (oder zweiten) Kontaktstelle in Verbindung steht, und mindestens einer der zweiten, durch helle Kreise angedeutete Kontaktabgriffe mit einer zweiten (oder ersten) Kontaktstelle elektrisch verbunden ist. Auf diese Weise ist gewährleistet, daß stets ein elektrischer Kontakt des Spielfahrzeuges 102, 103 mit der Steuerspannung aufrecht erhalten ist.

Aus der Fig. 14 ist des weiteren ersichtlich, daß die schraffiert dargestellten Kontaktabgriffe in eine erste Gruppe, und die unschraffiert dargestellten Kontaktabgriffe 112 zu einer zweiten Gruppe verschaltet sind. Zu jeder Gruppe gehört eine vorzugsweise aus Dioden gebildete Schaltung 113 bzw. 114, die nach einem an sich bekannten Schaltprinzip dafür sorgen, daß an einer den Schaltungen 113 und 114 nachgeschalteten Steuereinheit 115 zur Steuerung des Spielfahrzeuges 102 bei einer beliebigen Anordnung des Spielfahrzeuges auf der Spielfolie stets die zur Steuerung des Spielfahrzeuges benötigte Spannung anliegt. Man erkennt, daß an den einen Anschluß 116 der Steuereinheit 115 Strom nur von solchen Kontaktabgriffen 111 der ersten Gruppe durchgelassen wird, die in elektrischer Verbindung mit einer ersten Kontaktstelle stehen (im dargestellten Fall eine mit dem "+"-Zeichen angedeutete Kontaktstelle), während alle anderen Kontaktabgriffe 111 und 112 in Sperrichtung geschaltet sind. Entsprechendes gilt mit umgekehrten Vorzeichen für Kontaktabgriffe 112 der zweiten Gruppe, so daß an den anderen Anschluß 117 der Steuereinheit 115 immer nur Strom des anderen Vorzeichens durchgelassen wird.

Ausgangsseitig an die Steuereinheit 115 sind bei dem in Fig. 14 dargestellten Spielfahrzeug 103 eine Motorschaltung 118 für den Antrieb des Spielfahrzeuges 102, eine LenkSchaltung 119 zur Ansteuerung der Fahrtrichtung des Spielfahrzeuges 102, sowie etwa eine Beleuchtungsschaltung 120 vorgesehen. Die Schaltungen 118, 119 und 120 werden sämtlich durch ein an den Anschlüssen 116, 117 anliegendes und vermittels des Steuerpultes 109 in die Steuereinheit 115 einzugebendes digitalen Signales gesteuert. Hierzu sind von der Bedienungsperson entsprechende Daten in das Steuerpult 109 einzugeben, wie etwa die Nummer des anzusteuernden Spielfahrzeuges, Fahrtrichtung, Fahrgeschwindigkeit des Spielfahrzeuges, sowie weitere elektrische Funktionen wie etwa Ein-/Ausschalten von Fernlicht oder Betätigen eines Blinklichts. Zur bequemeren Handhabung und Steuerung kann das Steuerpult 109 gemäß Fig. 13 mit einer digitalen Zehner-Tastatur 121, einem Leuchtdiodendisplay 122, einem Schiebe-Potentiometer 123 zur Darstellung der Geschwindigkeit, einem Miniaturlenkrad und weiteren Schaltern und Elementen ausgestattet sein. Des weiteren ist denkbar, daß das Steuerpult 109 drahtlos mit der Spielfolie 101 verbunden ist, etwa über eine Infrarot-Fernbedienung. Außerdem kann für einen zweiten Spieler ein weiteres Steuerpult angeschlossen sein.

Bei dem in Fig. 14 dargestellten Ausführungsbeispiel sind die Kontaktstellen 105, 106 durch noppenförmige Auswüchse 125 in der Oberfläche der Spielfolie 101 gebildet, beispielsweise durch Prägung oder Tiefziehung der Spielfolie. Zumindest die dem Spielfahrzeug 102 zugewandte Seite des Auswuchses 125 ist mit einem elektrisch leitenden Material 126 bedeckt, beispielsweise einem Metall, das durch sich bekannte Verfahren wie beispielsweise Kathodenstrahlzerstäubung, Sputtern, CVD und dergleichen abgeschieden ist. Der zwischen den Kontaktstellen 105, 106 befindliche Bereich 127 ist frei von elektrisch leitendem Material 103 gehalten. Denkbar ist auch, daß das elektrisch leitende Material 126 in Form einer Hülse auf den noppenförmigen Auswuchs 125 gesetzt und hiermit fest verbunden ist.

Es wird vermerkt, daß die Darstellung gemäß Fig. 14 nicht unbedingt maßstabsgetreu zu verstehen ist. Insbesondere sind die Abmessungen des noppenförmigen Auswuchses 125 und des Bereiches 127 gegenüber dem Radius des Fahrzeugrades 128 übertrieben dargestellt. Bei der tatsächlichen Ausführungsform besitzen die Räder 128 des Spielfahrzeuges 102 eine solche Größe, daß ein gleichmäßiges Fahren wie auf einer ebenen Fläche möglich ist.

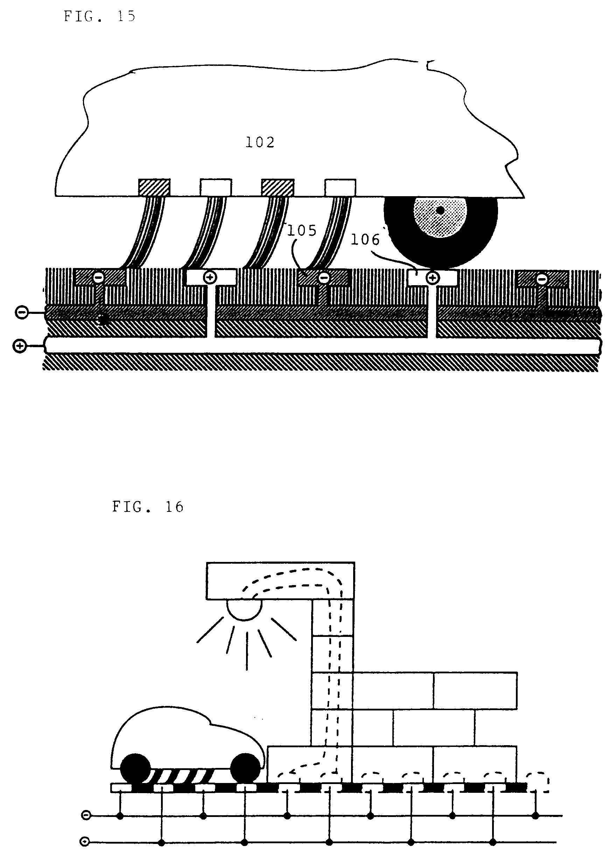

Fig. 15 zeigt in einer schematischen Seitenschnittansicht ein weiteres Ausführungsbeispiel einer erfindungsgemäßen Spielfolie zur elektrischen Versorgung eines darauf zu bewegenden Spielfahrzeuges 102, sowie zur elektrischen Versorgung von weiteren (nicht näher dargestellten) Spielelementen. Die Spielfolie ist hierbei in Form einer Schichtstruktur ausgebildet, die elektrisch leitende und elektrisch isolierende Schichten aufweist, die aus flexiblen und/oder starren Materialien hergestellt sind. Die mechanische Verbindung der einzelnen Schichten kann durch an sich bekannte Verfahren wie beispielsweise Kleben, Löten, Schweißen oder sonstige Verbindungsarten ausgeführt sein. Desweiteren sind auch Herstellungstechniken denkbar, wie sie beispielsweise in der Halbleitertechnologie bei der Herstellung von flexiblen leitenden oder isolierenden Schichten auf einem elastischen dielektrischen Substrat verwendet werden, oder, falls die Spielfolie in starrer Form hergestellt wird, so können Herstellungstechniken aus dem Gebiet der Fertigung von Halbleiter- und Elektronikplatinen angewendet werden. Wichtig ist hierbei, daß die Kontaktstellen 105 und 106, die im dargestellten Fall als zylinderförmige Metallstücke dargestellt sind, welche in Vertiefungen auf der Oberfläche der Spielfolie 101 eingepaßt sind, jeweils über elektrisch leitende Schichtstrukturen, die durch Isolationsschichten voneinander getrennt sind, angeschlossen sind.

Die Schichtstrukturen können hierbei auch aus optisch transparenten Material gebildet sein, so daß in vorteilhafter Weise auf der Unterseite der Spielfolie photorealistische Schichten und dergleichen angebracht sein können, die in der Draufsicht auf die Spielfolie beobachtet werden können. Des weiteren kann an der Unterseite der Spielfolie eine Haft- oder Klebeschicht angeordnet sein, um die Spielfolie auf einer (beliebig gekrümmten) Oberfläche befestigen zu können.

Fig. 16 zeigt eine schematische Seitenschnittansicht eines weiteren Ausführungsbeispieles einer erfindungsgemäßen Spielfolie, bei der neben einem Spielfahrzeug ein weiteres elektrisch zu versorgendes Spielelement, im dargestellten Fall eine Spielzeug-Straßenlaterne, sowie weitere Spielelemente vorgesehen sind.

## Patentansprüche

1. Spielfolie zum lösbaren Befestigen von mindestens einem Spielbaustein (2, 3) auf zumindest einem Teil einer Oberfläche (4) der Spielfolie (1), wobei gilt:
(a) die dem oder jedem Spielbaustein (2, 3) zugewandte Oberfläche (4) der Spielfolie (1) weist zumindest ein erstes mechanisches Verbindungsmittel (5) zum Zusammenwirken mit zumindest einem auf dem oder jedem Spielbaustein vorgesehenen zweiten mechanischen Verbindungsmittel (6) auf,
(b) die ersten und zweiten mechanischen Verbindungsmittel (5, 6) sind für ein gegenseitiges Einführen in einer zur Oberfläche der Spielfolie im wesentlichen rechtwinkeligen Richtung ausgebildet,
(c) die Spielfolie (1) weist an der dem oder jedem Spielbaustein abgewandten Oberfläche eine Haftschicht (7) zum lösbaren Anhaften der Spielfolie (1) an eine beliebig geformte Wandung (8) auf (Fig. 1 bis 3; Fig. 12).

2. Spielfolie zum lösbaren Befestigen von mindestens einem Spielbaustein (2, 3) auf zumindest einem Teil einer Oberfläche (4) der Spielfolie (1), wobei gilt:
(a) die dem oder jedem Spielbaustein (2, 3) zugewandte Oberfläche (4) der Spielfolie (1) weist zumindest ein erstes mechanisches Verbindungsmittel (5) zum Zusammenwirken mit zumindest einem auf dem oder jedem Spielbaustein vorgesehenen zweiten mechanischen Verbindungsmittel (6) auf,
(b) die ersten und zweiten mechanischen Verbindungsmittel (5, 6) sind für ein gegenseitiges Einführen in einer zur Oberfläche der Stützfolie im wesentlichen rechtwinkeligen Richtung ausgebildet,
(c) die Spielfolie (1) ist aus einem Material hergestellt, welches ein Biegen der Spielfolie und insbesondere Anpassen der Spielfolie an eine beliebig gekrümmte Oberfläche (9) einer Wandung (8) ermöglicht (Fig. 2).

3. Spielfolie zum lösbaren Befestigen von mindestens einem Spielbaustein (2, 3) auf zumindest einem Teil einer Oberfläche (4) der Spielfolie (1), wobei gilt:
(a) die dem oder jedem Spielbaustein (2, 3) zugewandte Oberfläche (4) der Spielfolie (1) weist zumindest ein erstes mechanisches Verbindungsmittel (5) zum Zusammenwirken mit zumindest einem auf dem oder jedem Spielbaustein vorgesehenen zweiten mechanischen Verbindungsmittel (6) auf,
(b) die ersten und zweiten mechanischen Verbindungsmittel (5, 6) sind für ein gegenseitiges Einführen in einer zur Oberfläche der Spielfolie im wesentlichen rechtwinkeligen Richtung ausgebildet,
(c) die Spielfolie (1) ist für Licht im sichtbaren Wellenlängenbereich transparent oder zumindest durchscheinend,
(d) die Spielfolie (1) weist an der dem oder jedem Spielbaustein abgewandten Oberfläche eine der äußeren Form der ersten Verbindungsmittel folgenden und aus oder mit graphischen Symbolen oder Bildern bestehende oder versehene Schicht (11) auf (Fig. 4).

4. Spielfolie nach einem der vorhergehenden Ansprüche, dadurch gekennzeichnet, daß die ersten mechanischen und/oder elektrischen Verbindungsmittel noppenförmige Auswüchse (5) darstellen, die in Hohlräume (6) des oder jeden Spielbausteins paßgenau und/oder elastisch verformbar eingreifen.

5. Spielfolie nach Anspruch 4, dadurch gekennzeichnet, daß die noppenförmigen Auswüchse (5) aus einem flexiblen Material hergestellt sind und/oder Hohlräume aufweisen, und das zweite mechanische und/oder elektrische Verbindungsmittel des Spielbausteins eine Vertiefung besitzt, wobei der oder jeder noppenförmige Auswuchs elastisch beaufschlagt in die Vertiefung drückbar ist, um den Spielbaustein lösbar auf der Oberfläche der Spielfolie zu arretieren.

6. Spielfolie nach Anspruch 4 oder 5, dadurch gekennzeichnet, daß der oder jeder noppenförmige Auswuchs (5) einen in Richtung zur Oberfläche der Spielfolie sich verjüngenden Querschnitt aufweist.

7. Spielfolie zum lösbaren Befestigen auf mindestens einem Spielbaustein mit mindestens einem Teil einer Oberfläche der Spielfolie, wobei gilt:
(a) wenigstens die dem oder jedem Spielbaustein abgewandte Oberfläche der Spielfolie weist zumindest eine wenigstens frei von Erhebungen vorgesehene, aus einem biegsamen Material hergestellte Spielfläche (18) auf,
(b) die der Spielfolie zugewandte Oberfläche des oder jeden Spielbausteins weist zumindest ein erstes mechanisches Verbindungsmittel zum Zusammenwirken mit zumindest einem auf dem Teil der Oberfläche am Randbereich der Spielfläche (18) der Spielfolie vorgesehenen zweiten Verbindungsmittel auf,
(c) die ersten und zweiten mechanischen Verbindungsmittel sind für ein gegenseitiges Einführen in einer zur Oberfläche der Spielfolie im wesentlichen rechtwinkeligen Richtung ausgebildet,
(d) die Abmessung oder der Flächeninhalt der Spielfläche beträgt mindestens ein Vielfaches der Abmessung bzw. des Flächeninhalts eines ersten mechanischen Verbindungsmittels (Fig. 5 bis 8).

8. Spielfolie nach Anspruch 7, dadurch gekennzeichnet, daß die ersten mechanischen Verbindungsmittel Klemmnocken (19) darstellen, die in entsprechend geformte Hohlräume des genannten Teils der Oberfläche der Spielfolie paßgenau eingreifen.

9. Spielfolie nach Anspruch 7 oder 8, dadurch gekennzeichnet, daß die zweiten Verbindungsmittel Bohrungen darstellen (Fig. 7).

10. Spielfolie zur elektrischen Versorgung von zumindest einem elektrischen Spielelement (102, 103), wobei gilt:
die dem oder jedem Spielelement (102, 103) zugewandte Oberfläche (104) der Spielfolie (101) weist eine Vielzahl von jeweils mit einem ersten Potential zu verbindenden ersten elektrischen Kontaktstellen (105) und eine Vielzahl von jeweils mit einem vom ersten Potential unterschiedlichen zweiten Potential zu verbindenden zweiten Kontaktstellen (106) auf,
die ersten und die zweiten Kontaktstellen (105, 106) sind mit solchen Abständen voneinander und abwechselnd derart angeordnet, daß pro beliebiger Flächeneinheit (110) in etwa dieselbe Anzahl von ersten und von zweiten Kontaktstellen vorhanden ist,
das Spielelement (102; 103) weist zumindest einen ersten Kontaktabgriff (111), welcher mit wenigstens einer ersten Kontaktstelle (105) elektrisch zu verbinden ist, und zumindest einen zweiten Kontaktabgriff (112) auf, welcher mit wenigstens einer zweiten Kontaktstelle (106) elektrisch zu verbinden ist,
dadurch gekennzeichnet, daß
die Spielfolie (101) aus einer biegsamen Trägerschicht aus isolierendem Material besteht, mit der die Kontaktstellen (105, 106) mechanisch verbunden sind, und auf deren dem oder jedem Spielbaustein abgewandten Oberfläche elektrisch leitende und durch Isolationsschichten voneinander getrennte Schichtstrukturen zum Anschluß der Kontaktstellen vorgesehen sind (Fig. 13 bis 16).
